Europäisches Patentamt

European Patent Office

Office européen des brevets

(11) Publication number: **0 647 078 A2**

# EUROPEAN PATENT APPLICATION

(21) Application number: **94306700.9**

(22) Date of filing: **13.09.94**

(51) Int. Cl.6: **H04Q 7/28**

(30) Priority: **29.09.93 US 128575**

(43) Date of publication of application:
**05.04.95 Bulletin 95/14**

(84) Designated Contracting States:
**DE FR GB SE**

(71) Applicant: **Ericsson GE Mobile
Communications Inc.**
**P.O. Box 4096,**
**Mountain View Road**
**Lynchburg,**
**Virginia 24502-9989 (US)**

(72) Inventor: **Brown, Thomas Alfred**

Route 7,
Box 73
Lynchburg,
Virginia 24503 (US)
Inventor: **Teel, Vicki J.**
Route 1,
Box 281
Goode,
Virginia 24556 (US)

(74) Representative: **Harris, Ian Richard et al**
c/o D. Young & Co.,
21 New Fetter Lane
London EC4A 1DA (GB)

(54) Multisite radio communication systems supporting encrypted data communications.

(57) A multisite radio frequency (RF) signal transmission system has been developed that interconnects individual publicly trunked RF sites and handles encrypted data transmissions sent between multiple sites through a multisite switch. Each individual site controller having a digital voter includes a voter selector device that routes communications from either the site voter or multisite switch to a main site working channel at that site. Control messages are sent to the voter selection device from the multisite switch and site voter selection device that causes the voter selector to appropriately route communications to the working channel.

FIGURE 2

Rank Xerox (UK) Business Services
(3.10/3.09/3.3.4)

This invention relates to digitally trunked radio frequency (RF) signal transmission systems interconnected by a multisite switch. In particular, this invention relates to RF signal voting and data encryption, e.g., VoiceGuard, features of RF multisite systems.

It is generally impractical for a single repeater transmitting radio site to effectively serve a large geographical area. The effective radiated power of the central site antenna is subject to legal and practical limits. In addition, natural and man-made topographical features, such as mountains and buildings, block signals from certain locations.

Multiple transmitting sites are necessary to provide RF communications to all locations within a given locality. Each site has a site controller that acts as a central control point for communications in the site area. To enable communications from one site area to another, a multisite switch networks the individual radio site systems together to establish communication paths between a plurality of sites. Because of this multisite networking, a radio caller in one site area can communicate with someone in another site area. An example of a multisite radio network is described in U.S. Patents Nos. 5,241,537; 5,200, 954 and 5,239,538, which are commonly assigned with this application and incorporated by reference.

Individual RF sites broadcast from a central antenna location to mobile radio transceivers within the site area. The central broadcast is of sufficient power to adequately cover the site area. In contrast, the mobile radios transmit relatively low power signals that may not be received by the central antenna location. To receive mobile radio communications from throughout the site area, satellite antenna receivers are distributed in the site area. These remote satellite receiver stations are necessary to receive the relatively weak transmissions from mobile radios. The satellite receiver stations send the received mobile radio broadcasts to the central controller for the site which may rebroadcast (repeat) the mobile radio signal at relatively high power from the central antenna location to other radios in that site area. In addition, the central site controller may send the mobile radio broadcast to other sites and dispatcher consoles through a multisite switch.

A single mobile radio broadcast may be received by several remote satellite stations. The single broadcast is sent in a redundant fashion by each of the satellite stations to the central controller. The central controller selects one of the redundant signals that it receives from the satellite stations and control receiver. The selection of redundant signals is commonly referred to as voting. Examples of voting techniques are described in U.S. Patent No. 5,131,010; 5,113,413, and 5,131,007, which are commonly assigned with this application and incorporated by reference.

Prior to networking individual digitally trunked RF sites in a multisite system, individual sites provided secure site communications by supporting digitized, encrypted transmissions within the site. An example of a technique for encrypting RF transmissions in an individual site is provided in U.S. Patent No. 5,131,010, encryption of publicly trunked RF communications is commonly accomplished by digitizing the communication and encrypting the data signal, such as by applying the DES encryption algorithm. Accordingly, it is known for individual RF sites to transmit and receive data encrypted RF signals, e.g., VoiceGuard (VG), in addition to conventional RF analogue audio (clear voice) signals.

Individual sites have been known to include analog voters that select the strongest of several versions of a received analog audio signals for processing by the central site controller. In addition, individual sites have had digital voters that select the best signal version that, for example, has the fewest signal bit errors. While selection of the best signal of several versions of an encrypted data signal, e.g., a VoiceGuard, is difficult, digital voters for individual sites have been developed to process encrypted signals. See e.g., US Patent No. 5,113,413.

Multisite RF systems having a multisite switch have not supported digital voting of encrypted RF signals until the present invention. The high data volume and the difficulty in selecting versions of encrypted data have proven difficult hurdles to overcome for multisiting. The only known prior example of a wide area RF system that supports encrypted data communications is a simulcast system described in US Patent No. 5,113,413, which is architecturally and functionally different that a multisite wide are RF system as described in this application. Accordingly, a need has existed for a multisite system capable of handling encrypted, e.g., VoiceGuard, data signals.

In accordance with the present invention therefore, there is provided a communications site for an RF trunked communication network having a plurality of communication sites interconnected by a multisite switch, said communication site comprising: a main site working channel including a central transceiver receiving and transmitting analog and digital communications, and a plurality of satellite receivers receiving analog and digital communications from remote RF units in a site broadcast area for said central transceiver; a voter selector coupled to said main site working channel and having inputs of analog and digital RF communications received by the main site working channel and outputting selected analog and data communications; a voter switch relay having inputs for selected analog and data communications from said voter selector and an input for analog and data communications from said multisite switch, and outputs for analog and data communications to said central transceiver and an output for analog and data communications to said multisite switch, said voter relay having a relay device for routing the communication inputs to the working channel transmitter and multisite switch, said routing being controlled by signals from said multisite switch and voter selector.

The present invention thus relates to a site voting system that is adapted for multisite systems. The invention includes a voter switch relay at a site controller that operates in conjunction with the multisite switch and a voter selector at the site. In the preferred embodiment of the invention, the voter switch relay replaces a console interface electronic board and a carrier operated relay at a site controller that previously had been used to provide audio/data connections for an individual working channel between the site and the multisite switch. The voter switch receives control signals from the multisite switch and the site voter selective to notify the voter switch of the origination (either site voter or multisite switch) of the transmission being sent to the working RF channel of the site. The voter switch relay routes the transmission to the site working channel depending upon the control signals that it receives from the multisite switch and voter. Because of the current invention, a site can operate in a multisite network and support encrypted data transmissions.

An exemplary embodiment of the invention is described hereinafter, by way of example only, with reference to the accompanying drawings, in which:

Figure 1 is an illustration of three site radio system networked together by a multisite switch;

Figure 2 is a block diagram of a voter switch relay at a site connected to a multisite switch;

Figure 3 is a schematic diagram of a voter switch relay in a site;

Figure 4 is a schematic of the architecture for a distributed network multisite; and

Figure 5 is a general block diagram of the architecture of a node in the multisite switch.

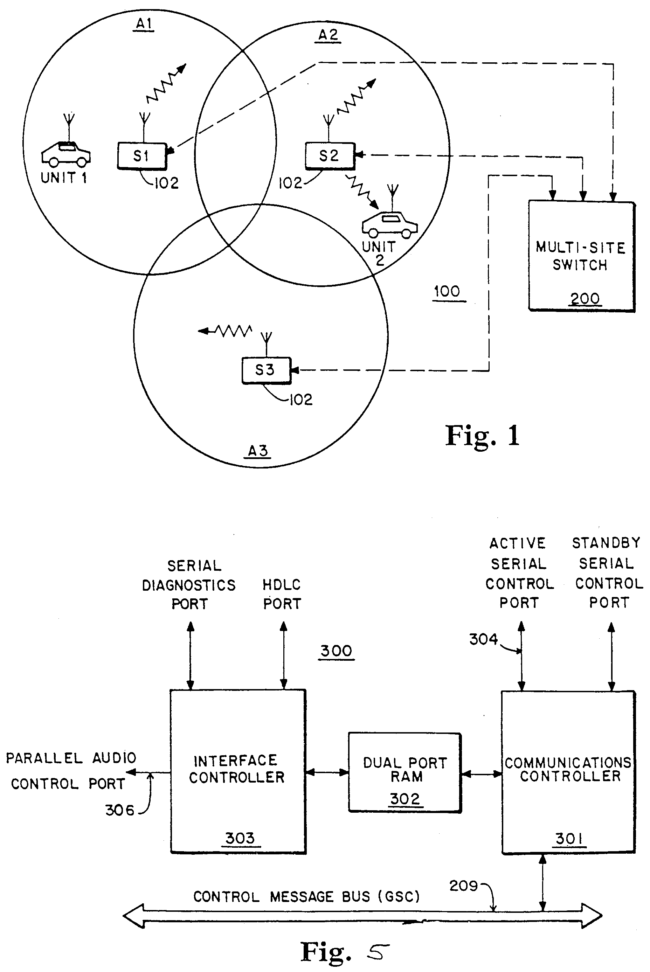

An exemplary trunked radio repeater system is generally depicted in Figure 1. Individual remote units communicate through shared radio repeater sites that are part of the trunked repeater system 100. The system is composed of individual site communication systems (site) 102. Each site includes a site transceiver that centrally broadcasts signals over a certain area, a site controller and satellite receivers. For example, site S1 broadcasts over area A1. The remote mobile radio units communicate with units within their own area or with units in other areas. The remote units also communicate with the dispatcher consoles via a multisite switch 200.

Each site is controlled by a site controller, e.g., S1. The site controller controls the radio frequency data and audio traffic in its site area. The site controller is connected to a central transceiver and several satellite receivers as previously mentioned. In addition, each site controller communicates with dispatcher consoles and other sites through the multisite switch 200. Each site has several working channels each with its individual central transceiver, satellite receivers, voters, selectors, modems and voter switch relays.

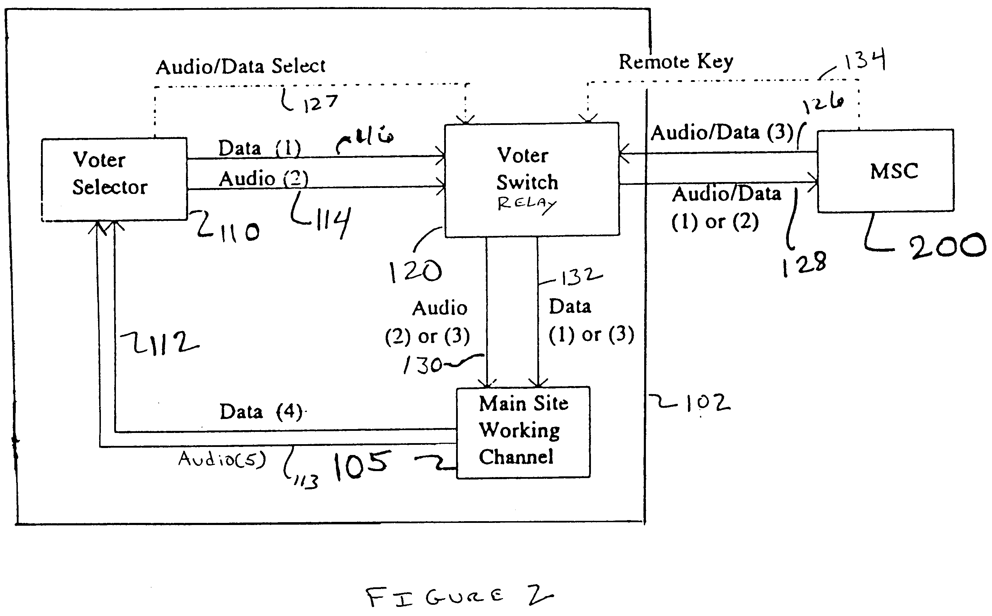

FIGURE 2 illustrates the operation of an individual working channel of a voted site 102 connected to a multisite switch (MSC) 200 in a network forming a wide area RF communication system 100. A working frequency (working channel frequency) is assigned by the site 102 for each communication handled by the site. The main site working channel 105 in each site includes a main site transceiver from which all working channel transmissions are broadcast and a group of remote satellite receivers. A voter selector 110 is connected via data path (Data 4) 112 and an audio path Audio (5) 113 to the functional working channel block 105. The voter selector 110 selects the best/strongest of several redundant mobile transmission signals received by a plurality of satellite receivers operating on the working channel frequency. This voter selector 110 includes an analog voter that selects the strongest of several redundant audio analog received signals and a digital voter that selects the best of several redundant data signals and tracks clear voice communications. The operation of the working channel and the voter selector is more fully described in U.S. Patent No. 5,131,010 entitled "Voice Guard Digital Voter For Multiple Site PST RF Trunking System" and No. 5,113,413 entitled "Voter Arrangement For Multiple Site PST RF Trunking System" that are commonly assigned with this application and incorporated by reference.

The voter selector 110 outputs the selected audio signal (Audio 2) over a dedicated one way audio path 114 to a voter switch relay 120 or data signal (Data 1) over a dedicated one-way data path 116 to the voter switch device. The communication paths between the site 102 and the multisite switch 200 includes a single inbound audio/data (Audio/Data 3) path 126 and a single outbound audio/data path (Audio/Data (1) or (2)) 128. This outbound path 128 carries both the data and audio site communications received at the site. The voter switch relay 120 routes the double paths 116, 114 to the single outbound path 128 to the multisite switch.

The voter switch relay 120 is controlled by site signals (Audio/Data Select) 127 from the voter selector 110 and multisite signals (Remote Key) from the multisite switch 200. The voter selector signals the voter switch relay when an RF data communication has been received on the main site working channel. The voter selector does not signal the relay when an analog audio signal is received because the default setting for the relay is set for a site originating, audio (clear -- not encrypted) communication. Accordingly, the relay requires no active signals to route clear voice analog communications that originated within the site.

When the voter selector receives one or more RF audio communications (Audio 5), the selected audio (Audio 2) is forwarded to the voter selector relay 120. In its default setting, the voter selector relay routes the audio signal to the main site working channel 105 over path 130 to the main site working channel so that the received audio communication may be repeated from the main site transmitter to the site area. In addition, the selected audio from path 114 is routed by the relay 120 to the multisite switch 200 over path 128. In this default setting, the data path 116 is inactive and connected to the main site working channel but not to the multisite switch.

When the voter selector receives one or more redundant encrypted data signal (Data 4), the digital voter selects the best signal and sends the selected data signal (data 1) to the voter switch relay over path 116. In addition, the voter selector sends a data select control signal, e.g., VoiceGuard active, to the voter switch relay that causes the relay to route the data communication from the voter (path 116) to the multisite switch over path 128. Since the data path 116 is routed to the main site working channel in the default configuration of the relay, the data communication is also routed to the main site working channel path 132 to be repeated over the main site transmitter. When data is being routed from the voter to the multisite switch and the main site working channel, the inactive audio path 114 remains connected to the main site working channel but is disconnected to the single output path to the multisite switch. Once the data communication is completed and the data select control signal is discontinued, the voter switch relay resets back to its default state before handling other communications.

When an audio/data communication is received from the multisite switch 200 by the main site 102 over inbound path 126, the multisite switch sends a control signal, e.g., remote push-to-talk (PTT), to the site via line 134. In response to this control signal, the voter switch relay 120 routes the multisite communication to the main site working channel for transmission of the remote audio from path 126.

If the multisite switch sends a data communication, e.g., VoiceGuard, to the site, then a corresponding signal (e.g., remote PTT) is issued from the multisite switch to the site via line 134. This signal is acted upon by the digital voter in the voter selector which issues a data select signal output to the voter switch relay. The relay routes the data communication from the multisite switch to the central transmitter for the site.

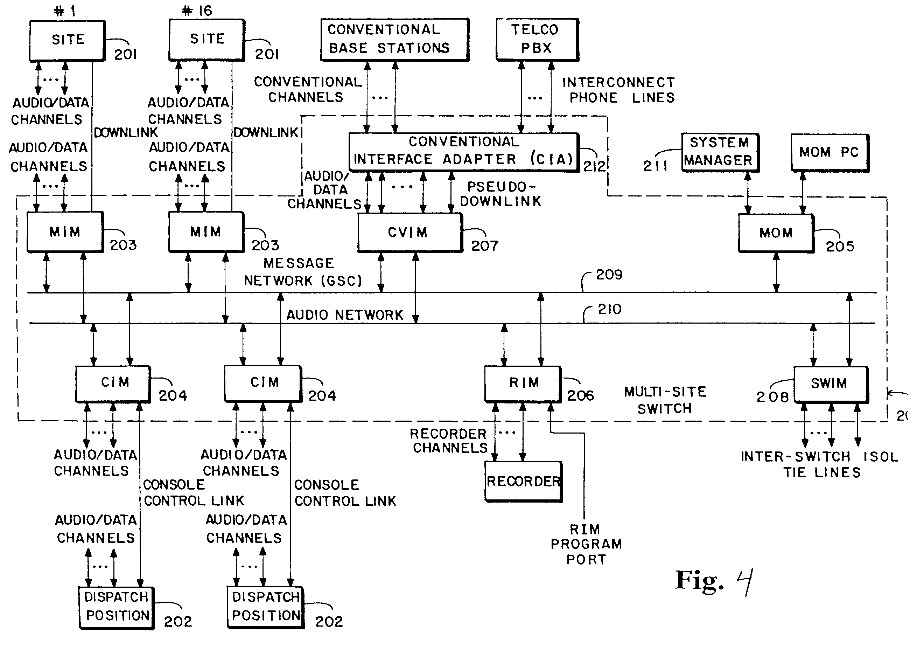

FIGURE 4 is a schematic diagram of the voter switch relay in context with the voter selector, site working channel and multisite switch. The voter switch relay 120 is an arrangement of electronic switches K1, K2, K3 and K4 that is controlled by a remote key command signal, e.g., PTT(neg.) received at input 150 from line 134 from the multisite switch and a data select signal received at input 176 (VG(neg.) from voter), which signal is received from the digital selector 152. The relay switch routes audio and data communications between the central site transceiver 154, the multisite switch (via paths 126, 128), the analog voter 156 and the digital selector 152.

In particular, all RF analog audio received by the site 102 through its working channel central transceiver 154 or satellite working channel receivers are forwarded to the analog voter 156 over a twin-wire pairs 158, e.g., telephone lines. The analog voter selects 156 an audio signal from the redundant signals, assuming that a plurality of signals are input to the voter, and the selected audio signal is output by the analog voter to the relay 120 over twin-wire path 160. In addition, the analog voter sends to the digital selector a RCVNG signal 161, while an active analog RF communication (as indicated by an RF control tone) is being received at the site.

Similarly, data communications received at the site at the central transceiver 154 or from satellite receivers are forwarded to the digital voter over twin-wire paths 162 and 164, respectively. Data communications from the central receiver are converted to audio tone signals by a modem, e.g., Rockwell™ modems, 166 from digital data on a data bus 168 between the central transceiver 154 and the modem for that transceiver 166.

The modem data from the central transceiver includes digitized command and information data. The command data is decoded and processed directly in the digital selector 152. The information data is converted by the digital selector back to TTL data and sent to a digital receiver 179 associated with the selector 152. The TTL information data from the central transceiver decoded by digital receiver 172 is analyzed with similar information data from satellite receivers, such as receiver 180, by the digital selector 152 to vote on the receive data, if necessary, and convert the selected information data by the selector's modem to audio tones to be output via path 170 to the voter switch relay 120.

A satellite receiver may include a modem to convert the received RF data communication to audio tone signals so that the received data may be sent to the digital selector over a conventional leased telephone line. Alternatively, a satellite digital receiver 180 may be directly coupled to the digital selector 152 if a direct link 164, e.g., RS 232 line, exists between the satellite antenna and the digital selector location. The operation of the data receivers and selector is described in more detail in U.S. Patent No. 5,113,413, incorporated by reference.

The best of the redundant received data signals entering the digital voter over paths 162 and 164 is selected by the digital voter and output to the voter switch relay over line pair 170. In addition, the digital receivers 179, 180 squelch the analog voter 156 by activating one or more of the squelch outputs 172 to the analog voter unless the digital voter receives a channel assignment message from the main site working channel signifying that the channel has been assigned to a clear voice (analog) call.

The digital voter also receives keying signals, e.g., a trunked call or channel assignment, from the main site working channel and multisite switch via line 134 on console key input 174. These signals notify the voter that a data communication is being received. The digital voter in turn signals the voter switch relay via path 171 to cause the relay to establish a path between the digital voter and the main site working channel 154. The digital voter also mutes the analog voter for the working channel when a digital data communications is being received by activating mute output 173.

In addition, a console key 175 input/output on each of the modems at the site is connected to the signal line from the multisite switch. The console key inputs causes the modem 166 and other modems for the working channel to turn on and begin a training sequence to latch onto the data communication. To allow all of the modems at the secondary sites throughout the network of sites to set the appropriate gain prior to training, a short tone, e.g., 30ms, precedes the training sequence in the data communication for both multisite and site data communications.

The routing within the voter switch relay 120 of audio and data communications is governed by the switches K1, K2, K3 and K4. The switches are set by the relay depending upon the presence of control signals at the PTT (neg.) from switch input 150 and the VG(neg.) from voter input 176. As shown in Figure 4, the settings of K1, K2, K3 and K4 are shown in their off positions which is the default mode of the switches. The settings of the switches for the various logic states of the control inputs is shown below in Table A:

TABLE A

| MULTISITE ($\overline{PTT}$) | DATA ($\overline{VG}$) | K1 | K2 | K3 | K4 | FUNCTION |
|---|---|---|---|---|---|---|
| 1 | 1 | OFF | OFF | OFF | OFF | CLEAR AUDIO REPEAT |
| 0 | 1 | OFF | OFF | ON | ON | MULTISITE CLEAR AUDIO |
| 1 | 0 | OFF | ON | OFF | OFF | DATA REPEAT |
| 0 | 0 | ON | ON | OFF | ON | MULTISITE DATA |

The switches K1, K2, K3 and K4 are set upon receipt of the control signals to the relay and released upon completion of the audio/data communication and release of the control signal to the relay.

Communications between sites are conducted through the multisite switch 200 as shown in FIGURE 4. The multisite switch communicates with each site controller 201 and dispatcher console 202. There are data and audio communication lines between the multisite switch and each site controller and dispatcher console.

The primary responsibility of the multisite switch is to establish and remote audio connections between sites and dispatch consoles. The multisite switch comprises a local area network of nodes. As shown in FIGURE 4, the nodes are labelled corresponding to whether they interface with a site controller, dispatcher console or other system component. For example, master interface modules MIMs 203 are nodes in the switch that interface with site controllers and console interface modules (CIMs) 204 are nodes that interface with dispatcher consoles. There are other nodes such as a Monitor Module (MOM) 205, Recorder Interface Module (RIM) 206, Conventional Interface Module (CVIM) 207 and a Switch Interconnect Module (SWIM) 208. The MOM 205 is the interface for the system manager and the MOM PC (personal computer) that have supervisory responsibility for the switch and overall radio system. The system manager updates the databases in all of the nodes.

The nodes of the switch are each connected to digital message bus 209 and one or more digital audio buses 210 in the switch. In the preferred embodiment, the message bus 209 is a message network using an Intel 80C152 Global Serial Channel (GSC) microprocessor. This GSC microprocessor is the communications controller in the controller card in each node. The message bus is a high speed data bus that resides in the GSC microprocessor. The message bus interconnects the communications microcontroller in the communications controller card of each node.

In the preferred embodiment, the audio bus 210 comprises 32 time division multiplexed buses. Each bus contains 32 slots and each slot forms a single audio channel. A maximum of 1024 audio slots may be routed through the switch (32 buses X 32 slots). The slots are assigned to individual nodes and are coupled to the audio boards in the nodes. The operation of the audio slots and the audio boards are described in more detail in Application Serial No. 07/658,636, entitled "Audio Routing Within Trunked Radio Frequency Multisite Switch" which commonly assigned application is incorporated by reference herein further identified above.

FIGURE 5 shows a block diagram of a controller card 300. This diagram is applicable to all of the nodes of the switch except for the conventional interface adapter (CIA). Thus, the hardware for the MIM, CVIM, MIM, SMIM, RIM and CIM is a switch controller card. Each card includes a communications controller 301, a dual-port random-access-memory (RAM) chip 302 and an interface processor 303.

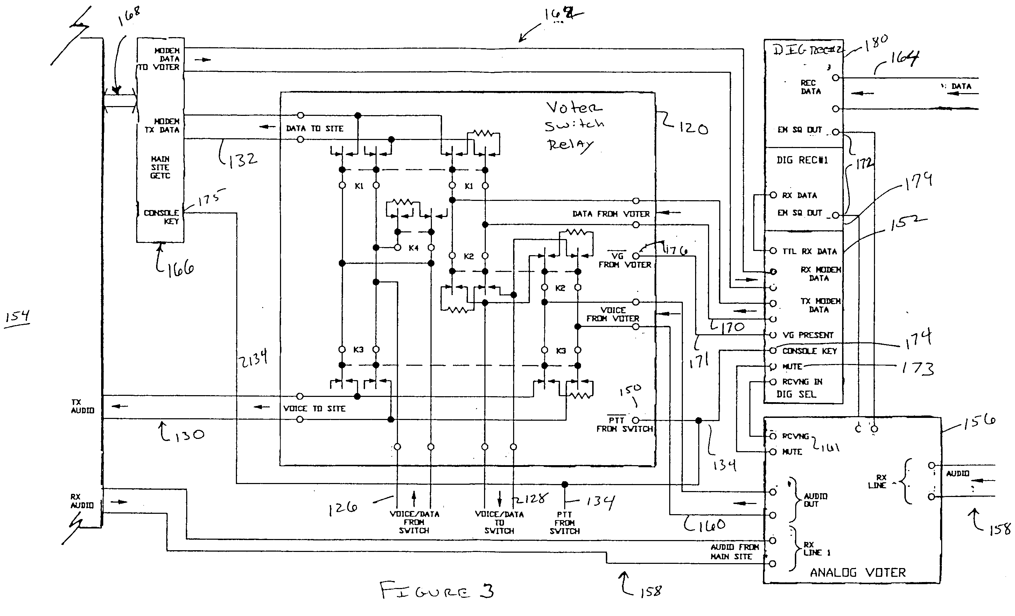

The communications controller 301 is a message router. It routes messages between the control message bus 209, the serial port leading outside of the switch 304 (134 in FIGS. 2 and 3), and the interface processor 303 in the node through the dual-port RAM 302. In the present embodiment, the communications controller is an Intel 80C152 GSC microprocessor. The communications controller is coupled to the GSC message bus 209. This controller places messages onto the bus and receives messages from the bus. Messages and signals received from the site controller over the serial port 304 are translated into a format usable by the multisite switch. The communications controller also translates switch messages into a format that the site controller understands. In connection with the present invention, the switch sends keying signals to a voter selection device at the site to advise the device that an audio/data signal is being sent from the multisite switch to the voter switch box for transmission from the individual site.

The interface processor 303 performs substantially all logical functions for the multisite node. In effect, the interface processor is the intelligence for the node. The interface processor, in this embodiment, is an Intel 80C186 microprocessor. The interface processor acts as a switch for the audio network and assigns audio switch slots to active audio site channels by operating the audio boards in the node via the parallel audio control port 306.

Each call through the switch is assigned a slot by the host MIM or CIM on the audio bus. When the call is terminated, the host node cancels the call and makes the slot available for assignment to another call. The interface processor for each MIM and CIM assigns slots, connects audio slots to the site controller or dispatcher console to establish a communications link, and terminates slots. Since all MIMs and CIMs perform these functions, they must continually inform each other and the other nodes of their slot assignments. Accordingly, the MIMs and CIMs send messages regarding slot assignments, slot updates and slot idles over the message network 209 to other nodes.

The invention has been described in connection with what is presently considered to be its preferred embodiment. The invention is not limited to this embodiment however and it will be appreciated that modifications to the present embodiment and further embodiments may be envisaged within the scope of the invention.

## Claims

1. A communications site for an RF trunked communication network having a plurality of communication sites interconnected by a multisite switch, said communication site comprising:

a main site working channel including a central transceiver receiving and transmitting analog and digital communications, and a plurality of satellite receivers receiving analog and digital communications from remote RF units in a site broadcast area for said central transceiver;

a voter selector coupled to said main site working channel and having inputs of analog and digital RF communications received by the main site working channel and outputting selected analog and data communications;

a voter switch relay having inputs for selected analog and data communications from said voter selector and an input for analog and data communications from said multisite switch, and outputs for analog and data communications to said central transceiver and an output for analog and data communications to said multisite switch, said voter relay having a relay device for routing the communication inputs to the working channel transmitter and multisite switch, said routing being controlled by signals from said mulitisite switch and voter selector.

2. A communication site as in claim 1 wherein the voter switch relay has a default setting for site originated, analog communications.

3. A communication site as in claim 2 wherein in said default setting the voter switch relay routes an analog communication from said voter selector to both said central transceiver and said multisite switch.

4. A communication site as in claim 1 wherein said voter selector, upon receiving a site originating data communication, sends a data select signal to said voter switch relay, and upon receipt of said data select signal, said voter switch relay routes data communications from said voter selector to said central transceiver and said multisite switch.

5. A communications site as in claim 1 wherein said multisite switch sends a keying signal to said voter switch relay and, upon receipt of said keying signal, said voter switch relay routes a communication from said multisite switch to said central transceiver.

6. A communication site as in claim 5 wherein said communication is a data communication from the multisite switch and said voter switch relay routes a data communication from said multisite input to a data communications output from said relay to said working channel.

7. A communication site as in claim 1 wherein said voter switch relay further comprises a data select input connected to a digital voter selector in said voter selector, and a keying signal input from said multisite switch.

8. A communications site as in claim 7 wherein said relay device comprises a plurality of switches operatively coupled to said inputs and outputs for analog and data communications, and said switches are controlled by a data select signal from said voter selector and a keying signal from said multisite switch.

9. An RF trunked communications network comprising at least one communications site according to any one of the preceding claims.

## Fig. 1

A1

A2

UNIT 1

S1

102

S2

102

UNIT 2

100

MULTI-SITE
SWITCH

200

S3

102

A3

## Fig. 5

SERIAL
DIAGNOSTICS
PORT

HDLC
PORT

300

ACTIVE
SERIAL
CONTROL
PORT

STANDBY
SERIAL
CONTROL
PORT

304

PARALLEL AUDIO
CONTROL PORT

306

INTERFACE
CONTROLLER

303

DUAL PORT
RAM

302

COMMUNICATIONS
CONTROLLER

301

CONTROL MESSAGE BUS (GSC)

209

8

EP 0 647 078 A2

Audio/Data Select

Remote Key

134

127

Voter
Selector

Data (1)

Audio (2)

110

114

126

Voter
Switch
RELAY

Audio/Data (3)

MSC

Audio/Data
(1) or (2)

200

120

128

132

112

Audio
(2) or (3)

130

Data
(1) or (3)

102

Data (4)

Audio(5)

113 105

Main Site
Working
Channel

FIGURE 2

FIGURE 3

Fig. 4

EP 0 647 078 A2